# EUROPEAN PATENT APPLICATION

(11) **EP 3 910 549 A1**
(43) Date of publication of application: **17.11.2021**
(21) Application number: 21172980.1
(22) Date of filing: 10.05.2021
(51) Int. Cl.: G06K 9/32, G06K 9/34, G06K 9/62

(54) **SYSTEM AND METHOD FOR FEW-SHOT LEARNING**

(30) Priority: 10.05.2020 IL 27455920
(71) Applicant: Cognyte Technologies Israel Ltd, 46733 Herzliya Pituach (IL)
(72) Inventor: Kalyuzhner, Zeev, 46733 HERZLIYA PITUACH (IL); Roesenthal, Hanan, 46733 HERZLIYA PITUACH (IL)
(74) Representative: Stütz, Jan

(57) **Abstract**

System including a storage device and a processor. The processor is configured to retrieve, from the storage device, a training set of images in which objects of a particular class are identified. The processor is further configured to train a model to identify other objects of the class, using the training set. The processor is further configured to identify candidate objects of the class in respective other images, using the trained model. The processor is further configured to augment the training set subsequently to identifying the candidate objects, by, for each image of at least some of the other images, calculating a feature vector describing at least one candidate object identified in the image, calculating a score quantifying a similarity between the feature vector and another feature vector describing the identified objects in the training set, and, provided that the score passes a predefined threshold, adding the image to the training set.

## Description

The present disclosure is related to the field of computer vision.

Neural networks and other machine-learned models may be trained to identify objects in images. "Few-shot learning" refers to the challenge of training such a model using only a small number of manually-labeled training samples.

There is provided, in accordance with some embodiments of the present disclosure, a system including a storage device and a processor. The processor is configured to retrieve, from the storage device, a training set of images in which objects of a particular class are identified. The processor is further configured to train a model to identify other objects of the class, using the training set. The processor is further configured to identify candidate objects of the class in respective other images, using the trained model. The processor is further configured to augment the training set subsequently to identifying the candidate objects, by, for each image of at least some of the other images, calculating a feature vector describing at least one candidate object identified in the image, calculating a score quantifying a similarity between the feature vector and another feature vector describing the identified objects in the training set, and, provided that the score passes a predefined threshold, adding the image to the training set. The processor is further configured to retrain the model using the augmented training set.

In some embodiments, the processor is further configured to initialize the model using a pre-trained model for identifying objects of other classes, by causing the model to recognize each of the other classes as being not of the particular class.

In some embodiments, the processor is configured to identify each candidate object of the candidate objects by identifying a portion of one of the other images that contains the candidate obj ect.

In some embodiments, the processor is configured to identify each candidate object of the candidate objects by segmenting the candidate object.

In some embodiments, prior to being augmented, the training set includes fewer than 10 images.

In some embodiments, the model includes a convolutional neural network.

In some embodiments, the processor is configured to compute the score by computing a cosine-similarity score.

In some embodiments, the other feature vector is an average of respective object feature vectors describing the identified objects, respectively.

There is further provided, in accordance with some embodiments of the present disclosure, a method including, using a training set of images in which objects of a particular class are identified, training a model to identify other objects of the class. The method further includes, using the trained model, identifying candidate objects of the class in respective other images. The method further includes, subsequently to identifying the candidate objects, augmenting the training set by, for each image of at least some of the other images, calculating a feature vector describing at least one candidate object identified in the image, calculating a score quantifying a similarity between the feature vector and another feature vector describing the identified objects in the training set, and, provided that the score passes a predefined threshold, adding the image to the training set. The method further includes, using the augmented training set, retraining the model.

In some embodiments the other feature vector is an average of respective object feature vectors describing the identified objects, respectively.

There is further provided, in accordance with some embodiments of the present disclosure, a computer software product including a tangible non-transitory computer-readable medium in which program instructions are stored. The instructions, when read by a processor, cause the processor to, using a training set of images in which objects of a particular class are identified, train a model to identify other objects of the class. The instructions further cause the processor to identify candidate objects of the class in respective other images, using the trained model. The instructions further cause the processor to augment the training set subsequently to identifying the candidate objects, by, for each image of at least some of the other images, calculating a feature vector describing at least one candidate object identified in the image, calculating a score quantifying a similarity between the feature vector and another feature vector describing the identified objects in the training set, and, provided that the score passes a predefined threshold, adding the image to the training set. The instructions further cause the processor to retrain the model, using the augmented training set.

According to some embodiments of the computer software product, the instructions cause initializing the model using a pre-trained model for identifying objects of other classes, by causing the model to recognize each of the other classes as being not of the particular class.

In some embodiments of the computer software product, the instructions cause the processor to identify each candidate object of the candidate objects by identifying a portion of one of the other images that contains the candidate object.

According to some embodiments of the computer software product, the instructions cause the processor to identify each candidate object of the candidate objects by segmenting the candidate object.

In some embodiments of the computer software product, prior to being augmented, the training set includes fewer than 10 images.

According to some embodiments of the computer software product, the model includes a convolutional neural network.

According to some embodiments of the computer software product, the instructions cause the processor to compute the score by computing a cosine-similarity score.

In some embodiments of the computer software product, the other feature vector is an average of respective object feature vectors describing the identified objects, respectively.

The present disclosure will be more fully understood from the following detailed description of embodiments thereof, taken together with the drawings, in which:

### BRIEF DESCRIPTION OF THE DRAWINGS

Fig. 1 is a schematic illustration of a system for training an object-identifying model, in accordance with some embodiments of the present disclosure;
Fig. 2 is a schematic illustration of an algorithm for iteratively retraining an object-identifying model, in accordance with some embodiments of the present disclosure; and
Fig. 3 is an example module diagram for a processor, in accordance with some embodiments of the present disclosure.

### DETAILED DESCRIPTION OF EMBODIMENTS

### OVERVIEW

Embodiments of the present disclosure provide an iterative algorithm for few-shot learning. Per the algorithm, a model, such as a neural network, is initially trained on a small training set (or "few-shot training set") of images in which objects of a particular class are manually identified. The model is then used to identify candidate objects of the same class in other images belonging to an image repository. Subsequently, those candidate objects that are most similar to the identified objects in the training set are identified, and any image containing at least one of these candidate objects is added to the training set.

Following the augmentation of the training set, the model is retrained, and is then applied again to the image repository. In this manner, the training set may be augmented, and the model retrained, multiple times, until all suitable candidate objects have been used for the training.

### SYSTEM DESCRIPTION

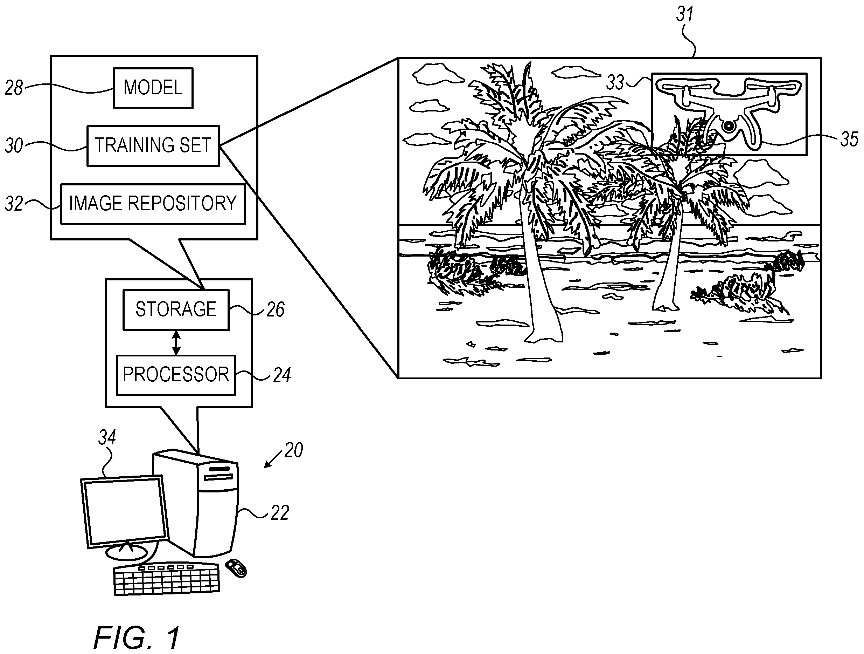

Reference is initially made to Fig. 1, which is a schematic illustration of a system 20 for training an object-identifying model 28, in accordance with some embodiments of the present disclosure.

System 20 comprises a processor 24 and a storage device 26, such as a hard drive or a flash drive. In some embodiments, processor 24 and storage device 26 belong to a single server 22. In other embodiments, the processor is embodied as a cooperatively networked or clustered set of processors distributed over multiple servers, and/or the storage device is embodied as a storage system distributed over multiple servers.

Storage device 26 is configured to store an object-identifying model 28, a training set 30 of images, and an image repository 32. Processor 24 is configured to retrieve each of these items from storage device 26, to use and/or modify the item as required, and to store the item, subsequently, in the storage device.

Training set 30 includes images 31 in which objects of a particular class are identified. For example, each image 31 may be associated with a corresponding mask image that flags the pixels belonging to a portion of the image containing an identified object - such as the pixels within a bounding box 33 for the object - and/or the pixels within a segmented boundary 35 of the object. Alternatively, the boundary of the portion of the image (e.g., bounding box 33) and/or boundary 35 may be marked in the image.

Image repository 32 includes a large number of (e.g., at least one million) unlabeled images, some of which include one or more objects of the particular class.

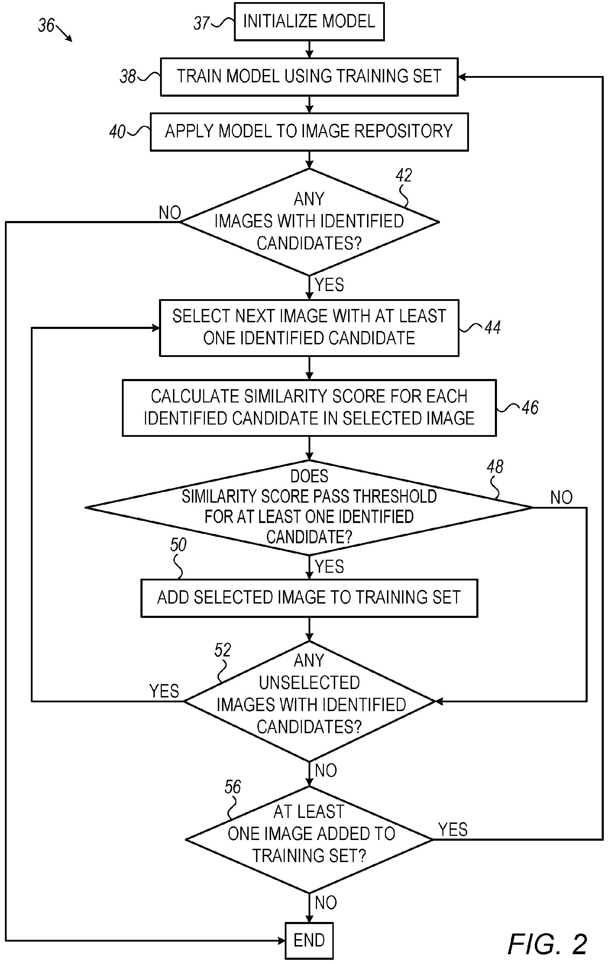

Typically, the training set is initially relatively small. For example, the training set may initially include fewer than 10 images containing manually-identified objects. Subsequently, as described below with reference to Fig. 2, the processor repeatedly augments the training set with images from the image repository in which objects of the same class were identified by model 28.

Typically, model 28 includes a convolutional neural network (CNN). As a specific example, model 28 may include a Mask R-CNN, described in He, Kaiming, et al., "Mask R-CNN," Proceedings of the IEEE international conference on computer vision, 2017, which is incorporated herein by reference. In identifying an object in an image, a Mask R-CNN first identifies a polygonal region of the image in which the object is located, and then performs a segmentation of the object. (Although the aforementioned reference suggests particular default values for the parameters of a Mask R-CNN, the present inventors have found that it may be advantageous to tune some of these parameters such that the parameters, in combination, provide greater precision with small training sets.)

In some embodiments, system 20 further comprises a monitor 34. In such embodiments, processor 24 may display any suitable output, such as an image containing a segmented object, on monitor 34. System 20 may further comprise a keyboard, a mouse, and/or any other suitable input or output device.

In some embodiments, the functionality of processor 24, as described herein, is implemented solely in hardware, e.g., using one or more Application-Specific Integrated Circuits (ASICs) or Field-Programmable Gate Arrays (FPGAs). In other embodiments, the functionality of processor 24 is implemented at least partly in software. For example, in some embodiments, processor 24 is embodied as a programmed digital computing device comprising at least a central processing unit (CPU) and random access memory (RAM). Program code, including software programs, and/or data are loaded into the RAM for execution and processing by the CPU. The program code and/or data may be downloaded to the processor in electronic form, over a network, for example. Alternatively or additionally, the program code and/or data may be provided and/or stored on non-transitory tangible media, such as magnetic, optical, or electronic memory. Such program code and/or data, when provided to the processor, produce a machine or special-purpose computer, configured to perform the tasks described herein.

Reference is now additionally made to Fig. 2, which is a schematic illustration of an algorithm 36 for iteratively retraining model 28, in accordance with some embodiments of the present disclosure. Algorithm 36 is executed by processor 24.

Algorithm 36 begins with a model-initializing step 37, at which the processor initializes model 28. Typically, to perform this initialization, the processor sets the model equal to a pre-trained model for identifying objects of other classes, except with respect to the range of classes recognized by the model. In particular, model 28 is caused to recognize only two classes: the particular class for which the model is to be trained, and another class that includes each of the other classes recognized by the pre-trained model. For example, if the pre-trained model identifies objects of the classes "cat," "dog," "tree," and "plane" and the model is to be trained to identify objects of the class "drone," the processor may cause the model to recognize only "drone" and "not drone," where any cat, dog, tree, or plane is identified as being of the class "not drone." Thus, advantageously, it may not be necessary to provide the model with additional training images in which objects of other classes are identified.

For example, for embodiments in which model 28 includes a CNN (e.g., a Mask R-CNN), the processor may initialize the CNN using a pre-trained CNN for object recognition, such as a residual neural network trained, for example, on the ImageNet database. In particular, the processor may replace the output layer of the pre-trained CNN with another output layer that recognizes only two classes as described above, but otherwise - e.g., with respect to the number of hidden layers and the neuronal weights in these layers - render the CNN of model 28 equal to the pre-trained CNN.

Subsequently to initializing the model, the processor, at a training step 38, trains model 28 using training set 30. In other words, the processor trains the model to identify other objects of the same class as those that are identified in the training set. For example, for embodiments in which the model includes a CNN, the processor may train the CNN using any suitable deep-learning training techniques known in the art.

Subsequently to performing training step 38, the processor, at a model-applying step 40, applies the trained model to image repository 32. In other words, using the trained model, the processor identifies candidate objects of the class (i.e., groups of pixels having a relatively high likelihood of representing objects of the class) in the images belonging to the image repository.

For example, the processor, using the model, may identify each candidate object in an image by identifying a portion of the image that contains the candidate object, such as the pixels within a bounding box for the candidate object. The processor may further generate a corresponding mask image in which the pixels belonging to the portion are flagged, and store the mask image in association with the image. Alternatively, the processor may mark the boundary of the portion in the image itself. Alternatively or additionally, the processor, using the model, may identify each candidate object by segmenting the candidate object. The pixels within the segmented boundary may then be flagged in a corresponding mask image, or the segmented boundary may be marked in the image itself.

Subsequently to identifying the candidate objects, the processor augments the training set with images containing those of the identified candidates that are most likely true positives. In other words, the processor adds, to the training set, images having the greatest likelihood of containing a correctly-identified object.

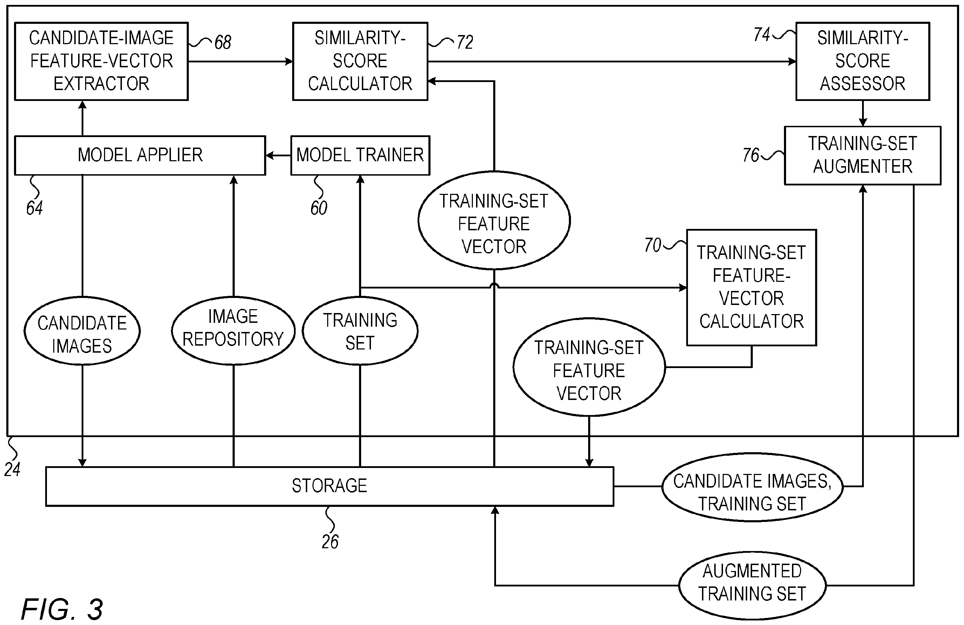

To augment the training set, the processor first verifies, at a first checking step 42, that at least some candidate objects were identified in the image repository. Next, at an image-selecting step 44, the processor selects an image with at least one identified candidate object. Subsequently, at a score-calculating step 46, the processor calculates a similarity score for each identified candidate in the selected image, as further described below with reference to Fig. 3. Each similarity score quantifies the similarity between the identified candidate object and the identified objects in the training set.

Following the score calculation, the processor checks, at a second checking step 48, whether the similarity score passes a predefined threshold for at least one of the identified candidates in the selected image. In particular, for embodiments in which a greater score indicates greater similarity, the processor checks whether the score exceeds the threshold for at least one identified candidate. Conversely, for embodiments in which a greater score indicates less similarity, the processor checks whether the score is less than the threshold for at least one identified candidate.

If the score passes the threshold for at least one identified candidate, the processor adds the selected image to the training set at an image-adding step 50, as further described below with reference to Fig. 3. Following image-adding step 50, or if the score does not pass the threshold for any of the candidate objects in the image, the processor checks, at a third checking step 52, whether the image repository contains any unselected images with identified candidates. If yes, the processor selects the next such image at image-selecting step 44, and then repeats the above-described procedure for this latest selected image.

In some embodiments, following training step 38, the processor randomly selects a subset of the images in the image repository. Subsequently, at model-applying step 40, the model is applied to the subset, rather than to the entire repository. Advantageously, this technique may provide greater efficiency, given the large size of the repository.

In alternative embodiments, following first checking step 42, the processor calculates respective scores for all identified candidate objects. Subsequently, the processor calculates a threshold based on the scores; for example, the processor may select, for the threshold, the score in the Nth percentile, N being, for example, greater than 95 (for embodiments in which a greater score indicates greater similarity) or less than 5 (for other embodiments). Subsequently, the processor adds, to the training set, each image having at least one identified candidate whose score passes the threshold. (It is noted that in the context of the present application, including the claims, a threshold calculated based on the scores is also considered to be "predefined.")

Upon ascertaining, at third checking step 52, that no unselected images with identified candidates remain, the processor checks, at a fourth checking step 56, whether at least one image was added to the training set. If yes, the processor returns to training step 38, using the augmented training set to retrain the model. The processor may thus repeatedly augment the training set and retrain the model, until either (i) the processor ascertains, at first checking step 42, that no candidate objects were identified in the training set, or (ii) the processor ascertains, at fourth checking step 56, that no images were added to the training set.

In some embodiments, as implied in Fig. 2, the processor selects each image in which at least one candidate object was identified, and considers this image, as described above, for possible inclusion in the training set. In other embodiments, the processor selects only a subset of the images with identified candidate objects. For example, each of the images may have an associated level of confidence with which the candidate objects in the image were identified, and the processor may select only those images whose respective levels of confidence exceed a predefined threshold. In such embodiments, first checking step 42 and third checking step 52 take the levels of confidence into account when assessing whether the image repository includes any images for possible inclusion in the training set.

Reference is now made to Fig. 3, which is an example module diagram for processor 24, in accordance with some embodiments of the present disclosure.

Fig. 3 shows one scheme by which the functionality of processor 24 may be distributed over multiple modules. Per this scheme, a training-set feature-vector calculator 70 retrieves the training set from the storage device prior to any augmentation of the training set. Subsequently, training-set feature-vector calculator 70 extracts a respective feature vector (or "descriptor") for each object identified in the training set. Based on the respective feature vectors, the training-set feature-vector calculator calculates a single "training-set feature vector" describing the identified objects. The training-set feature-vector calculator then stores this feature vector in the storage device.

To extract the feature vectors for the identified objects, the training-set feature-vector calculator typically uses a CNN that is pre-trained to identify a relatively large number (e.g., tens or hundreds) of different object classes, such as a residual neural network trained, for example, on the ImageNet database. (This CNN is typically distinct from the pre-trained CNN that is used to initialize the model.) In particular, the training-set feature-vector calculator may discard the output layer of the CNN, which generates the classificatory output of the CNN. The final hidden layer of the CNN may then be used to generate the feature vector for each object. Typically, for each object, the input to the CNN includes a portion of the image containing the object, such as the portion of the image within a bounding box for the object. For embodiments in which the object is segmented, pixels outside the segmented boundary of the object may be set to a constant color.

Typically, to calculate the training-set feature vector, the training-set feature-vector calculator averages the extracted feature vectors. Alternatively, the training-set feature-vector calculator may calculate the training-set feature vector by applying any other suitable mathematical function to the extracted feature vectors, or by simply selecting one of the extracted feature vectors to describe all the objects in the training set.

Per the scheme shown in Fig. 3, the modules of processor 24 further include a model trainer 60. Model trainer 60 retrieves the training set from storage device 26 and then uses the training set to train the model, as described above with respect to training step 38 (Fig. 2). (Prior to training the model, model trainer 60 may initialize the model, as described above with respect to model-initializing step 37.) Subsequently to training the model, model trainer 60 passes the model to a model applier 64.

Model applier 64 retrieves the image repository (or a subset of images belonging thereto) from the storage device and then applies the model to the image repository, as described above with respect to model-applying step 40 (Fig. 2). Subsequently to applying the model to the image repository, the model applier stores those images having identified candidate objects (or a subset of such images), referred to herein as "candidate images," in the storage device. The model applier also passes the candidate images to a candidate-image feature-vector extractor 68.

For each of the candidate images, candidate-image feature-vector extractor 68 extracts a respective feature vector for each candidate object identified in the image. (Typically, this extraction is performed as described above for training-set feature-vector calculator 70.) The extracted feature vectors, together with a reference data item indicating the candidate image and object to which each feature vector corresponds, are passed to a similarity-score calculator 72.

Similarity-score calculator 72 retrieves the training-set feature vector from the storage device. Subsequently, the similarity-score calculator iterates through the feature vectors received from candidate-image feature-vector extractor 68. For each of the feature vectors, the similarity-score calculator calculates a similarity score quantifying the similarity between the feature vector and the training-set feature vector, as described above with respect to score-calculating step 46 (Fig. 2). For example, the similarity-score calculator may calculate a cosine similarity score between the two vectors. The scores, together with the reference data item, are passed to a similarity-score assessor 74.

As described above with respect to second checking step 48 (Fig. 2), for each of the scores, similarity-score assessor 74 checks whether the score passes a predefined threshold. (In some embodiments, the similarity-score assessor, prior to assessing any of the scores, calculates the threshold based on the scores.) The similarity-score assessor further updates the reference data item to indicate each score that passes the threshold, and then passes the reference data item to a training-set augmenter 76.

Training-set augmenter 76 retrieves the candidate images and the training set from the storage device. Subsequently, the training-set augmenter, based on the reference data item received from the similarity-score assessor, identifies each candidate image containing at least one candidate object whose score passes the threshold. The training-set augmenter then adds each of these images to the training set such that the candidate objects in the image whose scores pass the threshold (but not any other candidate objects in the image) are identified. Subsequently, the training-set augmenter stores the augmented training set in the storage device.

Subsequently to the storage of the augmented training set, the training-set feature-vector calculator may update the training-set feature vector for the next training iteration. For embodiments in which the training-set feature-vector calculator calculates an average of the individual object feature vectors, the average may be weighted to reflect a lower level of confidence for those objects identified by the model, relative to manually-identified objects. In other words, feature vectors of objects identified by the model may be assigned a lower weighting than feature vectors of manually-identified objects belonging to the original training set.

It is emphasized that the module diagram of Fig. 3 is provided by way of example only, and that any other suitable scheme for distributing the functionality of processor 24 across multiple modules is also included in the scope of the present disclosure.

It will be appreciated by persons skilled in the art that the present invention is not limited to what has been particularly shown and described hereinabove. Rather, the scope of embodiments of the present invention includes both combinations and subcombinations of the various features described hereinabove, as well as variations and modifications thereof that are not in the prior art, which would occur to persons skilled in the art upon reading the foregoing description. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A system, comprising:
a storage device; and
a processor, configured to:
retrieve, from the storage device, a training set of images in which objects of a particular class are identified,
using the training set, train a model to identify other objects of the class,
using the trained model, identify candidate objects of the class in respective other images,
subsequently to identifying the candidate objects, augment the training set by, for each image of at least some of the other images:
calculating a feature vector describing at least one candidate object identified in the image,
calculating a score quantifying a similarity between the feature vector and another feature vector describing the identified objects in the training set, and
provided that the score passes a predefined threshold, adding the image to the training set, and using the augmented training set, retrain the model.

2. The system according to claim 1, wherein the processor is further configured to initialize the model using a pre-trained model for identifying objects of other classes, by causing the model to recognize each of the other classes as being not of the particular class.

3. The system according to claim 1, wherein the processor is configured to identify each candidate object of the candidate objects by identifying a portion of one of the other images that contains the candidate object.

4. The system according to claim 1, wherein the processor is configured to identify each candidate object of the candidate objects by segmenting the candidate object.

5. The system according to claim 1, wherein, prior to being augmented, the training set includes fewer than 10 images.

6. The system according to claim 1, wherein the model includes a convolutional neural network.

7. The system according to claim 1, wherein the processor is configured to compute the score by computing a cosine-similarity score.

8. The system according to claim 1, wherein the other feature vector is an average of respective object feature vectors describing the identified objects, respectively.

9. A method, comprising:
using a training set of images in which objects of a particular class are identified, training a model to identify other objects of the class;
using the trained model, identifying candidate objects of the class in respective other images;
subsequently to identifying the candidate objects, augmenting the training set by, for each image of at least some of the other images:
calculating a feature vector describing at least one candidate object identified in the image,
calculating a score quantifying a similarity between the feature vector and another feature vector describing the identified objects in the training set, and
provided that the score passes a predefined threshold, adding the image to the training set; and
using the augmented training set, retraining the model.

10. The method according to claim 9, further comprising initializing the model using a pre-trained model for identifying objects of other classes, by causing the model to recognize each of the other classes as being not of the particular class.

11. The method according to claim 9, wherein identifying each candidate object of the candidate objects comprises identifying the candidate object by identifying a portion of one of the other images that contains the candidate object.

12. The method according to claim 9, wherein identifying each candidate object of the candidate objects comprises identifying the candidate object by segmenting the candidate object.

13. The method according to claim 9, wherein, prior to being augmented, the training set includes fewer than 10 images.

14. The method according to claim 9, wherein the model includes a convolutional neural network.

15. The method according to claim 9, wherein calculating the score comprises calculating a cosine-similarity score.
